# EUROPÄISCHE PATENTANMELDUNG

(11) **EP 3 243 713 A1**
(43) Veröffentlichungstag der Anmeldung: **15.11.2017**
(21) Anmeldenummer: 17169811.1
(22) Anmeldetag: 05.05.2017
(51) Int. Cl.: B60R 25/0215

(54) **SENSORHEBEL FÜR EINE SENSORVORRICHTUNG ZUR ERKENNUNG ZUMINDEST EINER STELLPOSITION EINER LENKRADSPERRE**

(30) Priorität: 10.05.2016 DE 102016108568
(71) Anmelder: HUF Hülsbeck & Fürst GmbH & Co. KG, 42551 Velbert (DE)
(72) Erfinder: ZILLMANN, Horst, 81243 München (DE)
(74) Vertreter: Bals, Rüdiger

(57) **Zusammenfassung**

Die Erfindung betrifft einen Sensorhebel (210) für eine Sensorvorrichtung (200) zur Erkennung zumindest einer Stellposition einer elektrischen Lenkradsperre (100) eines Fahrzeugs, aufweisend eine Lagervorrichtung (220) für eine rotatorische Lagerung des Sensorhebels (210) sowie einen ersten Hebelarm (230) für eine Kontaktierung einer Steuerfläche (124) eines Getriebemittels (122) eines Getriebes (120) der elektrischen Lenkradsperre (100) und einen zweiten Hebelarm (240) mit einem Kontaktabschnitt (242) zur Kontaktierung eines Sensormittels (290) der Sensorvorrichtung (200) in Abhängigkeit der Position des Getriebemittels (122), wobei zweite Hebelarm (240) für eine Freigabe der Kontaktierung des Sensormittels (290) mit dem Kontaktabschnitt (242) ein erstes Schaltelement (244) für einen Eingriff in einen Schaltabschnitt (134) eines Sperrbolzens (130) in einer ersten Sperrrichtung (SR1) und ein zweites Schaltelement (246) für einen Eingriff in den Schaltabschnitt (134) der Sperrbolzens (130) in einer zweiten Sperrrichtung (SR2) aufweist.

## Beschreibung

Die vorliegende Erfindung betrifft einen Sensorhebel für eine Sensorvorrichtung zur Erkennung zumindest einer Stellposition einer Lenkradsperre sowie eine elektrische Lenkradsperre für die Lenkwelle eines Fahrzeugs nach den jeweiligen unabhängigen Ansprüchen.

Es ist bekannt, dass Fahrzeuge mit Lenkradsperren gegen unerwünschtes Entfernen des Fahrzeugs durch Diebstahl versehen werden sollen. Eine Lenkradsperre funktioniert üblicherweise derart, dass eine Lenkwelle mit entsprechendem Sperrabschnitt versehen ist, welche eine nutenförmige Ausbildung aufweist. In diese Nuten des Sperrabschnitts kann ein Sperrbolzen radial bezogen auf die Lenkwelle eingreifen und eine Rotation der Lenkwelle sperren. Die eingerastete Position des Sperrbolzens wird dabei als Sperrposition bezeichnet. Befindet sich der Sperrbolzen außerhalb des Eingriffs der Sperrnuten, wird dies üblicherweise als Freigabeposition bezeichnet.

Nachteilhaft bei den bekannten Lösungen ist es, dass insbesondere bei einer elektrisch angetriebenen Version (des Sperrbolzens) diese bauraumspezifisch ausgeführt werden müssen. Je nach Anwendungsposition im Fahrzeug gibt es Fahrzeugtypen bzw. Baureihen, bei welchen die elektrische Lenkradsperre im Wesentlichen vertikal ausgerichtet sein soll. Im Gegensatz dazu kann es auch vorkommen, dass eine horizontale Ausrichtung aufgrund von Platzproblemen notwendig ist. Für diese beiden Fälle bzw. für jegliche weitere unterschiedliche Ausrichtung einer elektrischen Lenkradsperre muss eine komplette Anpassung dieser Lenkradsperre sowie der einzelnen Bauteile an diese Ausrichtung erfolgen. Mit anderen Worten ist es notwendig, dass die elektrische Lenkradsperre bautypenspezifisch für das jeweilige Fahrzeug an den jeweiligen zur Verfügung stehenden Bauraum angepasst wird. Dies führt zu einem hohen Konstruktionsaufwand, da eine identische Funktionalität für alle Bauraumtypen durch unterschiedliche Konstruktionslösungen zur Verfügung gestellt werden muss. Darüber hinaus bestehen Nachteile hinsichtlich der Kosten und der Fertigungskomplexität von solchen elektrischen Lenkradsperren, da die Anzahl an gleichen (Bau-)Teilen (auch Gleichteile genannt) für unterschiedliche Baureihen von Fahrzeugen sehr gering bzw. nicht vorhanden ist. Die Flexibilität im Einsatz von bekannten elektrischen Lenkradsperren ist also auf eine Einsatzposition in einem spezifischen Bautyp eines Fahrzeugs bzw. einer solchen Baureihe eingeschränkt.

Es ist Aufgabe der vorliegenden Erfindung, in kostengünstiger und einfacher Weise, die voranstehend beschriebenen Nachteile zumindest teilweise zu beheben. Insbesondere ist es Aufgabe der vorliegenden Erfindung, in kostengünstiger und einfacher Weise eine erhöhte Flexibilität für den Einsatz einer elektrischen Lenkradsperre zu schaffen, insbesondere durch eine Erhöhung der Gleichteile in der Fertigung und einen reduzierten Konstruktionsaufwand.

Die voranstehende Aufgabe wird gelöst durch einen Sensorhebel mit den Merkmalen des Anspruchs 1 sowie eine elektrische Lenkradsperre mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Sensorhebel beschrieben sind, selbstverständlich auch im Zusammenhang mit der erfindungsgemäßen Lenkradsperre und jeweils umgekehrt, so dass bezüglich der Offenbarung zu den einzelnen Erfindungsaspekten stets wechselseitig Bezug genommen wird bzw. werden kann.

Unter dem Begriff Lenkradschloss oder Lenkradsperre wird im Rahmen der Erfindung jede Verriegelungsvorrichtung für ein funktionswesentliches Bauteil an einem Fahrzeug verstanden. Dabei wird üblicherweise das funktionswesentliche Bauteil des Fahrzeuges durch die Verriegelungsvorrichtung in der Sperrposition durch den Sperrbolzen insbesondere formschlüssig (ggf. zusätzlich auch kraftschlüssig) verriegelt. In einer Freigabeposition gibt hingegen der Sperrbolzen der Verriegelungsvorrichtung das funktionswesentliche Bauteil zur freien Nutzung frei. Bei dem funktionswesentlichen Bauteil kann es sich zumindest um eine Lenkradsäule, ein Bremspedal oder einen Gangschalthebel handeln, was durch die Verriegelungsvorrichtung in der Sperrposition verriegelt oder blockiert wird und somit unbrauchbar ist. Zur Detektion der Position des Sperrbolzens (zumindest zwischen der Freigabeposition und der Sperrposition) dient ein erfindungsgemäßer Sensorhebel an der Verriegelungsvorrichtung oder des Lenkradschlosses. Zur Vereinfachung wird im nachfolgenden Text immer nur von dem Lenkradschloss oder der Lenkradsperre gesprochen auch wenn jede Verriegelungsvorrichtung gemeint ist.

Erfindungsgemäß vorgesehen ist ein Sensorhebel für eine Sensorvorrichtung zur Erkennung zumindest einer Stellposition einer elektrischen Lenkradsperre eines Fahrzeugs. Hierfür weist der Sensorhebel eine Lagervorrichtung für eine rotatorische Lagerung des Sensorhebels sowie einen ersten Hebelarm für eine Kontaktierung einer Steuerfläche eines Getriebemittels eines Getriebes der elektrischen Lenkradsperre auf. Ein zweiter Hebelarm ist mit einem Kontaktabschnitt zur Kontaktierung eines Sensormittels der Sensorvorrichtung in Abhängigkeit der Position des Getriebemittels ausgestattet. Für eine Freigabe der Kontaktierung des Sensormittels mit dem Kontaktabschnitt ist der zweite Hebelarm mit einem ersten Schaltelement ausgestattet, für einen Eingriff in einen Schaltabschnitt eines Sperrbolzens in einer ersten Sperrausrichtung. Ein zweites Schaltelement des zweiten Hebelarmes dient dem Eingriff in den Schaltabschnitt des Sperrbolzens in einer zweiten Sperrausrichtung.

Ein erfindungsgemäßer Sensorhebel erlaubt es nun, diesen für eine elektrische Lenkradsperre in universeller Weise einzusetzen. Die Ausrichtung der elektrischen Lenkradsperre hängt, wie bereits erläutert worden ist, vom Bauraum in der Einsatzposition ab. So kann auch der Sperrbolzen relativ zu dem Rest der elektrischen Lenkradsperre in unterschiedlicher Weise ausgerichtet sein. Diese Ausrichtung des Sperrbolzens wird definiert durch die Ausrichtung in der entsprechenden Sperrrichtung, also der Bewegungslinie zwischen der Freigabeposition und der Sperrposition des Sperrbolzens. Durch das Ausbilden eines Sensorhebels in erfindungsgemäßer Weise kann die Erkennung zumindest der Freigabeposition des Sperrbolzens nun für nicht nur eine einzige spezifische Sperrrichtung, sondern für zwei oder sogar noch mehr Sperrrichtungen erfolgen. Das bedeutet, dass ein und derselbe Sensorhebel und damit vorzugsweise auch ein und dieselbe Sensorvorrichtung einer elektrischen Lenkradsperre für zwei oder mehr unterschiedliche Einsatzausrichtungen der elektrischen Lenkradsperre eingesetzt werden kann. Das bedeutet weiter, dass hinsichtlich der Konstruktion, der Fertigung, der Funktionsprüfung und weiteren notwendigen Schritten in der Herstellung einer elektrischen Lenkradsperre diese Schritte nur einmalig für den Sensorhebel bzw. für die Sensorvorrichtung für eine Vielzahl von unterschiedlichen Einsatzausrichtungen durchgeführt werden müssen. Gleiches gilt auch für die Herstellung, bei welcher durch eine Erhöhung der Einsatzflexibilität die gleichen Teile für mehr Einsatzmöglichkeiten zur Verfügung gestellt werden können. Die erhöhten Gleichteile und die damit zur Verfügung gestellte erhöhte Universalität des Einsatzes des Sensorhebels führen zu einer Reduktion von Komplexität und Kosten des Gesamtsystems der elektrischen Lenkradvorrichtung.

Ein Sensormittel kann dabei in unterschiedlichster Weise ausgebildet sein. Es ist dafür ausgebildet, eine Kopplung mit dem Kontaktabschnitt zu erkennen. In einfachster Weise handelt es sich bei dem Sensormittel um einen Kontaktschalter, welcher durch Berührung bzw. durch Drücken mit dem Kontaktabschnitt ein entsprechendes Informationssignal zur Verfügung stellt. Jedoch sind selbstverständlich auch andere, insbesondere kontaktfreie Lösungen für das Sensormittel denkbar. So kann bspw. eine induktive, magnetische, kapazitive, optische und/oder piezotechnische Erkennung eine kontaktlose Informationsauslösung zur Verfügung stellen. Auch die Kombination mit weiteren Sensorelementen bzw. Sensormitteln ist im Sinne der vorliegenden Erfindung selbstverständlich denkbar. Der Sperrbolzen, welcher hier eingesetzt wird, ist vorzugsweise für beide Sperrrichtungen identisch. So kann vorzugsweise die Positionierung der einzelnen Schaltelemente so am zweiten Hebelarm vorgesehen sein, dass sie in zugehörige Schaltabschnitte der bzw. einen einzigen Schaltabschnitt eines einzigen und identischen Sperrbolzens in unterschiedlichen Ausrichtungen bei unterschiedlichen Sperrrichtungen des Sperrbolzens eingreifen kann.

Dieser Sensorhebel kann sowohl als Haupt-Sensorbauteil als auch als Neben-Sensorbauteil verstanden werden. So ist insbesondere bei Rotationsbewegungen eines Getriebemittels von mehr als 360° ein Redundanzschalter notwendig. Bei einer Umdrehungszahl von mehr als 360° führt dies dazu, dass bei Stromausfällen oder anderweitigem Informationsverlust nicht mehr anhand der Positionierung des Getriebes eindeutig erkennbar ist, in welcher Position hinsichtlich Freigabeposition und Sperrposition sich der Sperrbolzen bzw. das Getriebe befindet. Hierfür kann erfindungsgemäß ein Neben-Sensormittel vorgesehen sein, welches z. B. in Form einer Lichtschranke mit einer Kulisse bzw. einer Lichtschrankenkulisse, des Getriebemittels korreliert. Damit ist neben dem Sensorhebel noch zumindest eine weitere Vorrichtung vorgesehen, um eine Redundanz hinsichtlich der Information über die Positionierung des Sperrbolzens zu schaffen.

Es kann von Vorteil sein, wenn bei einem erfindungsgemäßen Sensorhebel das erste Schaltelement und das zweite Schaltelement identisch oder im Wesentlichen identisch ausgebildet sind. Dies ist insbesondere dann von Vorteil, wenn für die unterschiedlichen Sperrrichtungen ein und derselbe Sperrbolzen eingesetzt werden soll. Die Gesamtkomplexität und vorzugsweise auch die Gesamtgeometrie des Sensorhebels sowie des Sperrbolzens und der gesamten elektrischen Lenkradsperre werden auf diese Weise deutlich vereinfacht bzw. reduziert. Es erfolgt eine Möglichkeit eines Eingriffs in denselben Sperrbolzen, so dass auch der Sperrbolzen als universell nutzbares Bauteil für die unterschiedlichen Sperrrichtungen bzw. Einsatzausrichtungen der elektrischen Lenkradsperre eingesetzt werden kann.

Weiter von Vorteil ist es, wenn bei einem erfindungsgemäßen Sensorhebel das erste Schaltelement und/oder das zweite Schaltelement einen Vorsprung aufweisen für einen zumindest abschnittsweisen Eingriff in eine Vertiefung oder in eine Durchgangsöffnung des Schaltabschnitts in dem Sperrbolzen. Der Schaltabschnitt kann dabei eine geometrische Korrelation aufweisen, welche mit der Geometrie des zugehörigen Schaltelementes korreliert. Ein Vorsprung eines Schaltelementes wird also von dem Material des Sperrbolzens so lange weggedrückt, bis eine Ausrichtungskorrelation zwischen dem Schaltelement und einer Vertiefung und/oder Durchgangsöffnung des Schaltabschnitts besteht. Erst dann kann das Schaltelement in diesen Schaltabschnitt eindringen und durch entsprechende Rotationsbewegung des Hebelarms das Schaltmittel eine entsprechende Schaltinformation der Sensorvorrichtung auslösen. Darüber hinaus kann durch das Eingreifen in mechanischer Weise eine zusätzliche Sicherung zur Verfügung gestellt werden. Diese Sicherung ist in doppelter Weise zu verstehen. Zum einen ist nun mechanisch, zumindest abschnittsweise vorzugsweise in formschlüssiger Ausbildung, sichergestellt, dass das Sensormittel nur dann eine entsprechende Position erkennt, wenn auch die geometrische Korrelation der einzelnen Bauteile dies rechtfertigt. Zum anderen sichert der Eingriff in die entsprechende Durchgangsöffnung und/oder Vertiefung, der zweite Hebelarm den Sperrbolzen gegen ein unerwünschtes Verlassen dieser Position.

Ebenfalls von Vorteil ist es, wenn bei einem erfindungsgemäßen Sensorhebel der erste Hebelarm und der zweite Hebelarm auf der gleichen Seite relativ zu der Lagervorrichtung angeordnet sind. Das bedeutet, dass um den Lagehebel herum in Summe ein Raum von 360° zur Verfügung steht. Das Anordnen der beiden Hebelarme auf der gleichen Seite relativ zur Lagervorrichtung ist dahingehend zu verstehen, dass sie in einem gemeinsamen Abschnitt liegen, und zueinander weniger als 180° an Differenzwinkel einschließen. Bevorzugt ist es, wenn der Winkelbereich zwischen den beiden Hebelarmen im Bereich von 90° ±5° liegt. Damit wird die Kompaktheit des Sensorhebels noch weiter erhöht, und insbesondere auch die Stellgenauigkeit bei der Aufnahme der entsprechenden Stellposition von der Steuerfläche des Getriebes verbessert.

Weiter von Vorteil ist es, wenn bei einem erfindungsgemäßen Sensorhebel der Kontaktabschnitt eine flächige, insbesondere ebene Erstreckung aufweist für die Kontaktierung einer Sensorfläche des Sensormittels. Dies ist insbesondere dann von Vorteil, wenn eine mechanische Betätigung der Sensorfläche notwendig bzw. gewünscht ist. Jedoch können auch andere Betätigungen sinnvoll sein. Insbesondere bei der mechanischen Betätigung kann jedoch die flächige bzw. ebene Erstreckung des zugehörigen Kontaktabschnitts einen reduzierten Bauraum und damit auch ein reduziertes Gewicht des Gesamtsystems des Sensorhebels zur Verfügung stellen.

Weiter von Vorteil ist es, wenn beim erfindungsgemäßen Sensorhebel der Kontaktabschnitt und die Schaltelemente am zweiten Hebelarm in einer gleichen oder im Wesentlichen gleichen Ebene angeordnet sind. Das bedeutet also, dass die Gesamtkomplexität des Kontaktabschnitts und der Schaltelemente auf eine reduzierte Abmessung verbessert werden. Die gesamte Bauform und die gesamten Baumaße werden auf diese Weise kompakter und damit auch das gesamte Bauteil des Sensorhebels vorzugsweise leichter.

Ebenfalls Gegenstand der vorliegenden Erfindung ist eine elektrische Lenkradsperre für die Lenkwelle eines Fahrzeugs. Die elektrische Lenkradsperre weist einen elektrischen Antrieb, ein Getriebe mit mindestens einem Getriebemittel, welches mit dem elektrischen Antrieb in Antriebsverbindung steht und zumindest einen Sperrbolzen auf. Das Getriebe kann dabei als Schneckengetriebe ausgestaltet sein und ist vorzugsweise selbsthemmend. Der Sperrbolzen ist zwischen einer Sperrposition und einer Freigabeposition bewegbar gelagert. Dabei weist der Sperrbolzen einen Schaltabschnitt für einen Eingriff eines ersten Schaltelements oder eines zweiten Schaltelements eines Sensorhebels gemäß der vorliegenden Erfindung auf. Durch die Verwendung eines erfindungsgemäßen Schalthebels bringt eine erfindungsgemäße elektrische Lenkradsperre die gleichen Vorteile mit sich, wie sie ausführlich mit Bezug auf den erfindungsgemäßen Sensorhebel erläutert worden sind. Das bedeutet also, dass der Sperrbolzen entweder ausgerichtet ist entlang der ersten Sperrrichtung, so dass das erste Schaltelement in Eingriff mit dem einen Schaltabschnitt des Sperrbolzens steht. Alternativ ist es möglich, dass der Sperrbolzen in der zweiten Sperrrichtung ausgerichtet ist, so dass sich ein Eingriff zwischen dem Schaltabschnitt und dem zweiten Schaltelement des Sensorhebels ausbilden kann.

Es kann von Vorteil sein, wenn bei einer erfindungsgemäßen Lenkradsperre die Lagerachse der Lagervorrichtung parallel oder im Wesentlichen parallel zu einer Getriebeachse des Getriebemittels ausgerichtet ist. Dies erlaubt es, eine weitere Erhöhung der Kompaktheit des Gesamtsystems der elektrischen Lenkradsperre vorzunehmen. Auch wird auf diese Weise eine besonders einfache Übersetzung der Getriebebewegung in die Sensorbewegung des Sensorhebels zur Verfügung gestellt.

Ebenfalls von Vorteil ist es, wenn bei einer erfindungsgemäßen elektrischen Lenkradsperre der Sperrbolzen einen Führungsabschnitt aufweist, welcher in führendem Kontakt steht mit einem ersten Umsetzungsabschnitt oder einem zweiten Umsetzungsabschnitt eines Umsetzungselementes zur Umsetzung einer Getriebebewegung des Getriebemittels in eine Bolzenbewegung des Sperrbolzens. Das Umsetzungselement weist einen Aufnahmeabschnitt zur Aufnahme der Getriebebewegung vom Getriebemittel sowie den ersten Umsetzungsabschnitt zur Umsetzung der Getriebebewegung in eine Bolzenbewegung des Sperrbolzens in einer ersten Sperrrichtung auf. Der zweite Umsetzungsabschnitt dient der Umsetzung der Getriebebewegung in eine Bolzenbewegung des Sperrbolzens in einer zweiten Sperrrichtung. Die erste Sperrrichtung und die zweite Sperrrichtung weisen dabei unterschiedliche Ausrichtungen auf. Der Aufnahmeabschnitt des Umsetzungselements steht dabei mit dem Getriebemittel zur Aufnahme der Getriebebewegung in Kontakt. Bei dieser Ausführungsform ist nun zusätzlich zum Sensorhebel auch das Umsetzungselement eingesetzt, welches ebenfalls universell für zwei unterschiedliche Sperrrichtungen ausgebildet sein kann. Wie erläutert wird, kann sowohl ein Umsetzungselement als auch ein Sensorhebel eine Universalität des Gesamtsystems der elektrischen Lenkradsperre erhöhen. Die Kombination eines Sensorhebels in universeller Weise mit einem Umsetzungselement in universeller Weise erlaubt es, die erfindungsgemäßen Vorteile der Reduktion der Komplexität und der Erhöhung der Flexibilität im Einsatz noch weiter zu verbessern.

Erfindungsgemäß wird bevorzugt weiter ein Umsetzungselement für eine elektrische Lenkradsperre zur Umsetzung einer Getriebebewegung eines Getriebemittels in eine Bolzenbewegung eines Sperrbolzens vorgeschlagen. Hierfür weist das Umsetzungselement einen Aufnahmeabschnitt zur Aufnahme der Getriebebewegung vom Getriebemittel auf. Darüber hinaus ist ein erster Umsetzungsabschnitt zur Umsetzung der Getriebebewegung in eine Bolzenbewegung des Sperrbolzens in einer ersten Sperrrichtung sowie wenigstens ein zweiter Umsetzungsabschnitt zur Umsetzung der Getriebebewegung in eine Bolzenbewegung des Sperrbolzens in einer zweiten Sperrrichtung vorgesehen. Dabei weisen die erste Sperrrichtung und die zweite Sperrrichtung unterschiedliche Ausrichtungen auf.

Ein Umsetzungselement dient dazu, in erfindungsgemäßer Weise zwei Bewegungen miteinander zu koppeln. Um eine Sperrfunktionalität der elektrischen Lenkradsperre gewährleisten zu können, muss eine Bewegung eines Sperrbolzens durchgeführt werden. Dieser Sperrbolzen wird zwischen einer Freigabeposition und einer Sperrposition hin und her bewegt. Diese Bewegung kann als Bolzenbewegung bezeichnet werden. Um diese Bewegung zur Verfügung stellen zu können, ist bei einer elektrischen Lenkradsperre ein Getriebe vorgesehen, welches die entsprechende elektrische Antriebskraft für diese Bolzenbewegung zur Verfügung stellt. Dieses Getriebe ist üblicherweise mit zumindest einem Getriebemittel in Form eines Zahnrades ausgestattet, welches beim Antrieb durch eine elektrische Antriebsvorrichtung eine Getriebebewegung durchführt. Die Getriebebewegung ist insbesondere eine Rotationsbewegung, welche z. B. durch ein entsprechendes Zahnrad zur Verfügung gestellt werden kann.

Erfindungsgemäß ist nun das Umsetzungselement mit einem Aufnahmeabschnitt ausgestattet. Dieser kann z. B. einen nasenförmigen Fortsatz aufweisen, welcher in eine entsprechende Kulissenführung oder Führungsnut des Getriebemittels eingreift. Sobald sich nun das Getriebemittel in seine Getriebebewegung, vorzugsweise in eine Rotationsbewegung, versetzen lässt, wird dementsprechend der Aufnahmeabschnitt durch diese Führungsfunktionalität des Nasenfortsatzes ebenfalls eine Bewegung durchführen. Bevorzugt führt das Umsetzungselement selbst eine Umsetzungsbewegung entlang einer Umsetzungsrichtung durch. Darüber hinaus ist das Umsetzungselement mit zumindest zwei unterschiedlichen Umsetzungsabschnitten versehen. Jeder dieser Umsetzungsabschnitte dient dazu, eine Kopplung mit dem Sperrbolzen zur Verfügung zu stellen. Dabei können ebenfalls nasenförmige Fortsätze des Sperrbolzens in entsprechende Öffnungen der jeweiligen Umsetzungsabschnitte eingreifen. Durch die zugehörige Korrelation wird nun eine Sperrbewegung des Sperrbolzens bzw. eine Bolzenbewegung des Sperrbolzens freigegeben oder blockiert. Darüber hinaus ist darauf hinzuweisen, dass die Bolzenbewegung sowohl zwangsgeführt als auch federgestützt zur Verfügung gestellt sein kann. Bei einer federgestützten Lösung ist der Sperrbolzen in Richtung der Sperrposition mit einer Federkraft vorgespannt beaufschlagt. Sobald sich das Umsetzungselement in eine Freigabeposition bewegt, gibt dieser zugehörige Umsetzungsabschnitt den Weg für den Sperrbolzen frei. Die Kraft für die Bewegung entlang der Sperrrichtung kommt bei dieser Ausführungsform dann von der zugehörigen vorspannenden Feder. Selbstverständlich sind auch zwangsgeführte Lösungen denkbar, bei welcher der jeweilige Umsetzungsabschnitt eine formschlüssige Korrelation mit einem entsprechenden Abschnitt des Sperrbolzens eingeht.

Wie aus der voranstehenden Erläuterung deutlich wird, ist nun das Umsetzungselement für die Umsetzung nicht nur in eine erste Sperrrichtung, sondern in zumindest eine zweite Sperrrichtung ausgestaltet. Geometrisch wird dies dadurch gelöst, dass zwei separate Umsetzungsabschnitte vorgesehen sind. Jeder dieser Umsetzungsabschnitte ist also spezifisch für eine Sperrrichtung, wobei die beiden Sperrrichtungen der beiden Umsetzungsabschnitte unterschiedliche Ausrichtungen aufweisen. Soll nun ein erfindungsgemäßes Umsetzungselement in einer elektrischen Lenkradsperre eingesetzt werden, so können die beiden Umsetzungsabschnitte zwei unterschiedliche Sperrrichtungen ermöglichen. Da die Sperrrichtung im Wesentlichen die Korrelation des Sperrbolzens zu den angetriebenen Bauteilen der elektrischen Lenkradsperre darstellt, kann durch zwei unterschiedliche Sperrrichtungen auch eine Vielzahl von zumindest zwei unterschiedlichen Einbaupositionen bzw. Einbauausrichtungen der elektrischen Lenkradsperre zur Verfügung gestellt sein. Insbesondere, wenn die beiden Sperrrichtungen, wie dies später noch beschrieben wird, zueinander senkrecht oder im Wesentlichen senkrecht stehen, können auch zwei Einbaupositionen der elektrischen Lenkradsperre vorgesehen werden, welche zueinander senkrecht oder im Wesentlichen senkrecht stehen. Durch das Ausbilden des Umsetzungselementes in der erfindungsgemäßen Weise reicht es aus, allein das Umsetzungselement einmalig umzukonstruieren. Das Getriebe, der Antrieb und auch weitere Bauteile der elektrischen Lenkvorrichtung können im Wesentlichen unverändert bleiben. Die deutlich erhöhte Flexibilität bzw. Universalität für den Einsatz einer elektrischen Lenkradsperre wird ausschließlich oder im Wesentlichen ausschließlich durch das Umsetzungselement und seine erfindungsgemäße Ausgestaltung zur Verfügung gestellt.

Für die Korrelation zwischen der Getriebebewegung und dem Umsetzungselement ist der Aufnahmeabschnitt ausgebildet. Dieser Aufnahmeabschnitt dient also dazu, die Getriebebewegung in dem Umsetzungselement aufzunehmen. In einfachster Weise ist dabei das Umsetzungselement selbst als ein Bauteil ausgestaltet, welches eine Umsetzungsbewegung entlang einer Umsetzungsrichtung ausführt. Hierzu erfolgt später noch nähere Erläuterung. Jedoch ist es grundsätzlich auch denkbar, dass das Umsetzungselement selbst eine passive und damit unbewegte Rolle übernimmt. So ist es selbstverständlich auch denkbar, dass das Umsetzungselement mit dem Aufnahmeabschnitt ausgestattet ist, die Getriebebewegung in selbst unbewegter Weise zu übertragen. Dafür kann das Umsetzungselement einzelne Detailbauteile aufweisen, welche wiederum diese Bewegung übergeben.

Es kann von Vorteil sein, wenn bei einem erfindungsgemäßen Umsetzungselement das Umsetzungselement entlang einer Umsetzungsrichtung bewegbar gelagert ist, insbesondere in translatorischer Weise, für die Durchführung einer Umsetzungsbewegung bei der Umsetzung der Getriebebewegung in die Bolzenbewegung. Dabei handelt es sich um eine besonders einfache und kostengünstige Ausgestaltungsform. So kann hier das Umsetzungselement insbesondere als einstückiges bzw. monolithisches oder integrales Bauteil ausgebildet sein. Bei einem Antrieb des Getriebemittels mithilfe einer elektrischen Antriebsvorrichtung wird das Getriebemittel, vorzugsweise in Form eines Getrieberades, in Getriebebewegung versetzt. Durch den Aufnahmeabschnitt kann diese Getriebebewegung in das Umsetzungselement eingebracht werden und erzeugt am Umsetzungselement eine Umsetzungsbewegung entlang einer Umsetzungsrichtung. Durch die Korrelation des Aufnahmeabschnitts, z. B. in Form eines nasenförmigen Fortsatzes und einer zugehörigen Zwangsführung oder Kulissenführung in dem Getriebemittel, erfolgt bereits hier eine Umsetzung einer rotatorischen Bewegung eines Getriebemittels in Form eines Zahnrades in eine translatorische Umsetzungsbewegung in Umsetzungsrichtung des Umsetzungselements. Für die Durchführung dieser Bewegung kann das Umsetzungselement eine entsprechende Lagervorrichtung aufweisen, welche insbesondere als Gleitlagerung ausgestaltet ist. Die Gesamtbewegung, also die Bewegung von der Freigabeposition in die Sperrposition durch das Umsetzungselement ist dabei vorzugsweise ≤10 cm ausgebildet. Das Umsetzungselement kann bei der Durchführung einer translatorischen Umsetzungsbewegung auch als Umsetzungsschieber bezeichnet werden.

Ebenfalls von Vorteil ist es, wenn bei einem erfindungsgemäßen Umsetzungselement die erste Sperrrichtung des ersten Umsetzungsabschnitts und die zweite Sperrrichtung des zweiten Umsetzungsabschnitts zueinander senkrecht oder im Wesentlichen senkrecht stehen. Wie bereits erläutert worden ist, sind im Einsatz von elektrischen Lenkradsperren unterschiedliche Bauräume vorgegeben. In den häufigsten Fällen muss dementsprechend die elektrische Lenkradsperre vertikal oder horizontal eingebaut werden. Somit stehen die am häufigsten vorkommenden Einsatzpositionen bzw. Einsatzausrichtungen der elektrischen Lenkradsperre zueinander senkrecht oder im Wesentlichen senkrecht. Diese Korrelation der Einsatzausrichtungen spiegelt sich in der Korrelation der Sperrrichtungen zueinander wieder. Durch das senkrechte oder im Wesentlichen senkrechte Ausrichten der beiden Sperrrichtungen zueinander kann demnach eine elektrische Lenkradsperre mit einem erfindungsgemäßen Umsetzungselement flexibel an diese beiden am meisten vorkommenden Ausrichtungen im Einsatz der elektrischen Lenkradsperre angepasst sein. Mit anderen Worten sind selbstverständlich jedoch auch noch weitere Sperrrichtungen denkbar, welche mit ebenfalls möglicherweise vorkommenden Ausrichtungen der Einsatzposition der elektrischen Lenkradsperre korrelieren. Eine senkrechte oder im Wesentlichen senkrechte Ausrichtung zueinander ist dabei insbesondere als eine Ausrichtung zu verstehen, welche miteinander einen Winkel von 90° ±5° ausbildet.

Weiter von Vorteil kann es sein, wenn bei einem erfindungsgemäßen Umsetzungselement der erste Umsetzungsabschnitt und/oder der zweite Umsetzungsabschnitt einen Freigang entgegen der ersten Sperrrichtung und/oder der zweiten Sperrrichtung aufweist. Dies ist insbesondere dann der Fall, wenn der Sperrbolzen federbeaufschlagt ist. So ist es häufig von Vorteil, wenn der Sperrbolzen mit einer Federkraft in Sperrpositionsrichtung beaufschlagt ist. Dies führt dazu, dass durch den jeweiligen Umsetzungsabschnitt der Sperrbolzen in die Freigabeposition gezogen wird. Bei einer Bewegung des Umsetzungselements in die Sperrposition erfolgt auf diese Weise kein aktives Schieben des Sperrbolzens, sondern vielmehr ein Freigeben der Bewegung des Sperrbolzens, wobei die tatsächliche Bolzenbewegung durch ein Anschieben mithilfe der Federkraft durchgeführt wird. Diese Federkraft hat mehrere Vorteile. Ein entscheidender Vorteil der Federbeaufschlagung ist es, dass eine geometrische Fehlpositionierung vermieden wird. So ist in einem entsprechenden Sperrabschnitt der Lenkwelle eine Anzahl von Sperrnuten vorgesehen. Zwischen den einzelnen Sperrnuten weisen diese Sperrnuten Trennwände auf. Befindet sich nun die Lenkwelle in einer Position, in welcher der Sperrbolzen auf eine solche Trennwand radial auftrifft, so kann der Sperrbolzen nicht in die zugehörige Sperrnut des Sperrabschnitts der Lenkwelle eindringen. Vielmehr verbleibt er in radial undefinierter Zwischenposition. Dies würde bei einem Zwangsantrieb durch eine elektrische Lenkradsperre möglicherweise zur Beschädigung des Getriebes bzw. des Getriebemittels führen. Durch die Beaufschlagung mit einer Feder wird eine solche Beschädigung jedoch wirksam vermieden. So wird bei der Bewegung des Sperrbolzens in die Sperrposition im Falle des Auftreffens auf einer Wandung zwischen zwei benachbarten Sperrnuten der Sperrbolzen stehen bleiben. Das Umsetzungselement kann sich jedoch weiter bis in seine Endposition der Sperrposition bewegen, da sich in diesem Fall der stehende Sperrbolzen in den Freigang entgegen der ersten Sperrrichtung bzw. entgegen der zweiten Sperrrichtung bewegen kann. Dies erfolgt unter einer Erhöhung der Federkraft, welche auf diese Weise weiter zusammengedrückt wird. Mit anderen Worten kann auch bei einer Fehlpositionierung des Sperrbolzens relativ zu den Sperrnuten des Sperrabschnitts der Lenkwelle ein erfindungsgemäßes Umsetzungselement eingesetzt werden. Durch ein entsprechendes leichtes Verdrehen der Lenkwelle rastet anschließend der Sperrbolzen auch in seiner Sperrposition im Sperrabschnitt ein. Zu diesem Zeitpunkt des Einrastens befindet sich jedoch das Umsetzungselement bereits in seiner Sperrposition. Ein solcher Freigang kann dabei im Wesentlichen jede beliebige Form aufweisen. Im einfachsten Fall handelt es sich um die Ausbildung des Umsetzungsabschnitts mit einem anschließenden Langloch. Jedoch sind auch komplexere Formen eines solchen Freigangs im Sinne der vorliegenden Erfindung möglich. Dies ist insbesondere dann der Fall, wenn die zugehörige Sperrrichtung nicht identisch mit der Umsetzungsrichtung einer Umsetzungsbewegung des Umsetzungselements ist.

Ebenfalls von Vorteil ist es, wenn bei einem erfindungsgemäßen Umsetzungselement die erste Sperrrichtung des ersten Umsetzungsabschnitts eine von einer Umsetzungsrichtung einer Bewegung des Umsetzungselementes unterschiedliche Ausrichtung aufweist. Mit anderen Worten führt das Umsetzungselement bei dieser Ausführungsform eine Umlenkung der Bewegung durch. So ist die Umsetzungsrichtung vorzugsweise als Translationsbewegung ausgebildet. Auch die Sperrrichtung ist vorzugsweise für eine translatorische Bewegung ausgerichtet. Die Umsetzungsrichtung und die Sperrrichtung stehen bei dieser Ausführungsform vorzugsweise senkrecht oder im Wesentlichen senkrecht zueinander. Vorzugsweise ist bei dieser Ausführungsform ebenfalls ein Freigang vorgesehen, wie er im voranstehenden Absatz erläutert worden ist. Die Ausführungsform dieses Absatzes ist insbesondere als die zusätzliche Sperrrichtung zu verstehen, welche einem einfachen Langloch als zweiten Umsetzungsabschnitt zugeordnet ist und damit die Universalität hinsichtlich der Einsatzmöglichkeiten für die entsprechend ausgestattete elektrische Lenkradsperre zur Verfügung stellt.

Ein weiterer Vorteil kann erzielt werden, wenn bei einem erfindungsgemäßen Umsetzungselement der erste Umsetzungsabschnitt wenigstens zwei Teil-Umsetzungsabschnitte aufweist, welche unterschiedliche Umsetzungssteigungen aufweisen. Eine solche Umsetzungssteigung kann auch als Umsetzungsübersetzung bezeichnet werden. So ist der Umsetzungsabschnitt z. B. als Führungsfläche bzw. als Freigabefläche ausgestaltet. Bei einer Umsetzung in eine zu der Umsetzungsrichtung unterschiedliche Sperrrichtung führt dies dazu, dass z. B. in einem ersten Teil-Umsetzungsabschnitt beim Lösen der Sperrposition in Richtung der Freigabeposition nur ein geringer Hub erfolgt. Im weiteren Verlauf der Bewegung in Richtung der Freigabeposition nimmt die Umsetzungssteigung in einem zweiten Teil-Umsetzungsabschnitt deutlich zu, so dass ein vergrößerter Hub und damit eine beschleunigte bzw. schnellere Bewegung des Sperrbolzens durchgeführt wird. Mit anderen Worten können hier unterschiedliche Getriebeübersetzungen innerhalb des Umsetzungsabschnittes durch unterschiedliche Teil-Umsetzungsabschnitte gewährleistet werden und den unterschiedlichen Bewegungsabschnitten zwischen der Freigabeposition und der Sperrposition zugeordnet sein. Dies führt insbesondere dahin, dass bei dem Lösen des Sperrbolzens direkt aus der Sperrposition möglicherweise große Kräfte zu überwinden sind. So kann z. B. durch eine versuchte Lenkbewegung im gesperrten Zustand der Sperrbolzen in seiner Sperrposition eine hohe Reibungskraft mit den anliegenden Wänden der Sperrnut eingehen. Um diese hohe Sperrkraft zu überwinden, wird dementsprechend für diesen ersten Teil der Bewegung des Sperrbolzens aus der Sperrposition heraus mit einem geringen Bewegungshub gearbeitet. Dies führt dazu, dass im Wesentlichen langsam der Sperrbolzen aus dieser reibschlüssigen Kontaktierung in der Sperrnut herausgezogen wird. Die entsprechende Kraftübertragung führt dazu, dass ebenfalls eine minimierte Kraftübertragung und damit eine geringere mechanische Belastung innerhalb der Bauteile der elektrischen Lenkradsperre vorliegen. Sobald der Sperrbolzen den Eingriff in der Sperrnut verlassen hat, kann die restliche Bewegung bis zur Freigabeposition deutlich schneller und damit mit mehr Hub durchgeführt werden. Die Unterscheidung in zumindest zwei unterschiedliche Teil-Umsetzungsabschnitte erlaubt dies in einfacher und kostengünstiger Weise.

Bei dem Umsetzungselement gemäß dem voranstehenden Absatz kann es von Vorteil sein, wenn der erste Umsetzungsabschnitt noch einen dritten Teil-Umsetzungsabschnitt aufweist mit einem Freigang, vorzugsweise in Richtung der Umsetzungsbewegung. Das bedeutet, dass anschließend an den maximalen Hub nun kurz vor Erreichen der Freigabeposition oder bei Erreichen der Freigabeposition noch ein Freigang in Richtung der Umsetzungsrichtung zur Verfügung gestellt ist. Das kann auch als Einrasten des Umsetzungselementes bzw. als ein Sichern des Sperrbolzens in seiner Freigabeposition verstanden werden. Sobald der Freigang des dritten Teil-Umsetzungsabschnitts erreicht ist, erfolgt demnach keine weitere Bewegung des Sperrbolzens mehr, sondern vielmehr verbleibt er in dieser Freigabeposition. Dieser zusätzliche Freigang steht dabei vorzugsweise senkrecht zu dem Freigang, welcher entgegen der Sperrrichtung dieser Ausführungsform zur Verfügung gestellt ist.

Ebenfalls Gegenstand der vorliegenden Erfindung ist eine elektrische Lenkradsperre für die Lenkwelle eines Fahrzeugs. Eine solche elektrische Lenkradsperre weist einen elektrischen Antrieb, ein Getriebe mit mindestens einem Getriebemittel, welches mit dem elektrischen Antrieb in Antriebsverbindung steht, und weiter zumindest einen Sperrbolzen auf. Dieser Sperrbolzen ist zwischen einer Sperrposition und einer Freigabeposition bewegbar gelagert. Dabei weist der Sperrbolzen einen Führungsabschnitt auf, welcher ihn führendem Kontakt mit dem ersten Umsetzungsabschnitt oder dem zweiten Umsetzungsabschnitt eines erfindungsgemäßen Umsetzungselements steht. Dabei steht der Aufnahmeabschnitt des Umsetzungselements mit dem Getriebemittel zur Aufnahme der Getriebebewegung in Kontakt. Durch die Verwendung eines erfindungsgemäßen Umsetzungselements bringt eine elektrische Lenkradsperre die gleichen Vorteile mit sich, wie sie ausführlich mit Bezug auf ein erfindungsgemäßes Umsetzungselement erläutert worden sind. Dabei kann der Sperrbolzen mit ausschließlich einem Umsetzungsabschnitt in Kontakt stehen. Selbstverständlich kann vorzugsweise ein identischer Sperrbolzen für beide Umsetzungsabschnitte alternativ eingesetzt werden, so dass nicht nur die elektrische Lenkradsperre und der zugehörige Umsetzungsabschnitt in universeller Weise einsetzbar sind, sondern dies auch für den Sperrbolzen gilt.

Eine erfindungsgemäße elektrische Lenkradsperre lässt sich dahingehend weiterbilden, dass eine Sensorvorrichtung vorgesehen ist, mit einem Sensormittel zur Erkennung zumindest einer Stellposition des Getriebemittels, des Umsetzungselements und/oder des Sperrbolzens. Damit wird es möglich, eine Rückmeldung an eine Bordelektronik eines Fahrzeugs zu geben, in welcher Position sich der Sperrbolzen befindet. Insbesondere ist dabei eine Information wichtig, welche die sichere Wiedergabe der Freigabeposition beinhaltet. Die Freigabeposition ist die Position, in welcher der Fahrbetrieb ungefährdet möglich ist. Was auf jeden Fall vermieden werden muss, und was durch die Sensorvorrichtung auch in sicherer Weise zur Verfügung gestellt wird, ist in einer Fahrposition des Fahrzeugs im bewegten Zustand eine Bewegung des Sperrbolzens in seine Sperrposition. Die Erkennung kann dabei hinsichtlich der Sperrposition und der Freigabeposition sowohl in direkter als auch in indirekter Weise erfolgen.

Ebenfalls von Vorteil ist es, wenn bei einer erfindungsgemäßen elektrischen Lenkradsperre die Sensorvorrichtung mit einem Sensorhebel ausgestattet ist, aufweisend eine Lagervorrichtung für eine rotatorische Lagerung des Sensorhebels sowie einen ersten Hebelarm für eine Kontaktierung einer Steuerfläche eines Getriebemittels eines Getriebes der elektrischen Lenkradsperre. Ein zweiter Hebelarm weist einen Kontaktabschnitt zur Kontaktierung eines Sensormittels der Sensorvorrichtung in Abhängigkeit der Position des Getriebemittels auf. Der zweite Hebelarm weist für eine Freigabe der Kontaktierung des Sensormittels mit dem Kontaktabschnitt ein erstes Schaltelement für einen Eingriff in einen Schaltabschnitt des Sperrbolzens in einer ersten Sperrausrichtung und ein zweites Schaltelement für einen Eingriff in den Schaltabschnitt des Sperrbolzens in einer zweiten Sperrausrichtung auf. Bei einer derartigen Ausführungsform ist nicht nur das Umsetzungselement, sondern auch der Sensorhebel ausgestaltet, um in universeller Weise eingesetzt zu werden. Durch das Ausbilden der zwei separaten Schaltelemente, welche spezifisch für die Ausrichtung der jeweiligen Sperrrichtung sind, kann die universelle Einsetzbarkeit nun auch für die gesamte Sensorfunktionalität zur Verfügung gestellt werden. Dabei können selbstverständlich alle Merkmale, wie sie hinsichtlich des Sensorhebels noch erläutert werden, auch in Kombination mit der erfindungsgemäßen elektrischen Lenkradsperre eingesetzt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Ausführungsform einer elektrischen Lenkradsperre,
- Figur 2: eine Einzeldarstellung eines Umsetzungselements,
- Figur 3: eine Ausführungsform der Figuren 1 und 2 mit einer ersten Ausrichtung des Sperrbolzens in Freigabeposition,
- Figur 4: die Ausführungsform der Figur 3 mit dem Sperrbolzen in Sperrposition,
- Figur 5: die Ausführungsformen der Figuren 1 und 2 mit dem Sperrbolzen in einer zweiten Ausrichtung mit dem Sperrbolzen in Freigabeposition,
- Figur 6: die Ausführungsform der Figur 5 mit dem Sperrbolzen in Sperrposition,
- Figur 7: eine erste horizontale Ausrichtung einer elektrischen Lenkradsperre,
- Figur 8: die elektrische Lenkradsperre der Figur 7 in einer vertikalen Ausrichtung,
- Figur 9: die Korrelation von einem Sperrbolzen in zwei unterschiedlichen Ausrichtungen mit einem Sensorhebel einer Sensorvorrichtung,
- Figur 10: eine Detaildarstellung des Sensorhebels gemäß der Figur 9,
- Figur 11: eine Draufsicht auf die Ausführungsform der Figur 10 mit einem Sperrbolzen in Freigabeposition,
- Figur 12: die Ausführungsform der Figur 11 in einer Zwischenposition und
- Figur 13: die Ausführungsform der Figuren 11 und 12 mit dem Sperrbolzen in Sperrposition.

In den nachfolgenden Figuren werden für die gleichen technischen Merkmale auch von unterschiedlichen Ausführungsbeispielen die identischen Bezugszeichen verwendet.

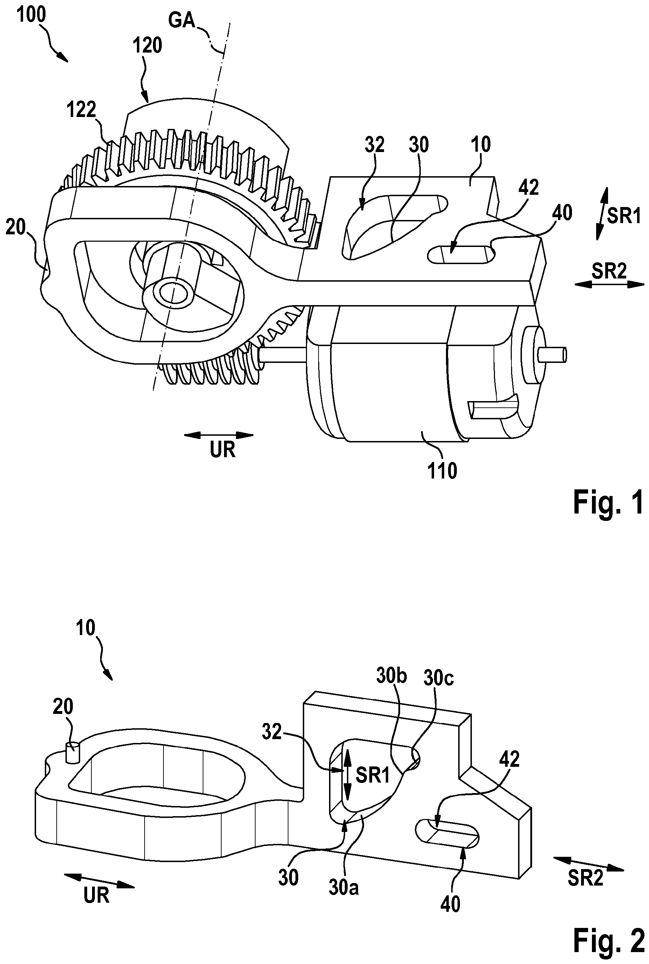

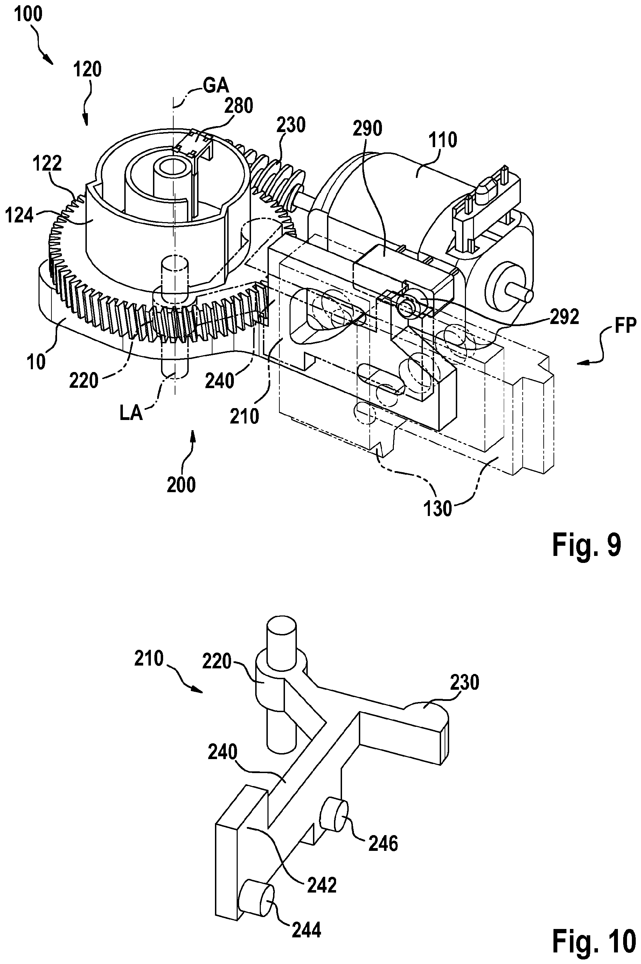

Anhand der nachfolgenden Figuren wird eine elektrische Lenkradsperre 100 näher erläutert. Diese elektrische Lenkradsperre 100 weist eine universelle Einsetzbarkeit hinsichtlich der Einsetzausrichtung auf. Dabei sind insbesondere zwei Teilbauteile für diese Universalität der elektrischen Lenkradsperre 100 verantwortlich. Dabei handelt es sich zum einen um das Umsetzungselement 10, welches im Detail in Figur 2 dargestellt ist. Die Figur 10 zeigt einen Sensorhebel 210, welcher die Universalität der Sensorvorrichtung 200 zur Verfügung stellt. Bei der nachfolgenden Erläuterung der Ausführungsformen wird darauf hingewiesen, dass sowohl das Umsetzungselement 10 alleine als auch der Sensorhebel 210 alleine bereits erfindungsgegenständliche Vorteile mit sich bringen kann. Die Kombination des Sensorhebels 210 mit einer elektrischen Lenkradsperre 100 und/oder eines Umsetzungselements 10 mit einer elektrischen Lenkradsperre 100 bringen diese Vorteile der Universalität noch weiter mit sich.

Figur 1 zeigt schematisch, wie eine elektrische Lenkradsperre 100 grundsätzlich aufgebaut ist. Ein Elektromotor dient als elektrischer Antrieb 110 und ist mit einer Schneckenabtriebswelle versehen. Diese Schneckenabtriebswelle kämmt mit einem Getriebemittel 122 eines Getriebes 120. Dieses Getriebemittel 122 ist hier als Zahnrad ausgestaltet und rotiert um eine Getriebeachse GA. Wie in der Unteransicht gemäß Figur 1 zu erkennen ist, ist hier sowohl ein Nockeneingriff als auch auf der Oberseite, wie dies die Figur 2 zeigt, ein Führungseingriff mithilfe eines Aufnahmeabschnitts 20 in nasenförmiger Weise möglich.

Die Figur 2 zeigt schematisch im größeren Detail das Umsetzungselement 10. Am linken Ende des Umsetzungselements 10 ist ein nasenförmiger Fortsatz als Aufnahmeabschnitt 20 zu erkennen. Auch die Öffnung, innerhalb dieses Umsetzungselements 10, kann zumindest teilweise mit dem nasenförmigen Nocken in der Unteransicht gemäß Figur 1 zusammenwirken, so dass auch dort eine Funktionalität oder eine Teilfunktionalität des Aufnahmeabschnitts 20 erkennbar sein kann.

Am rechten Ende der Figur 2 ist am Umsetzungselement 10 zu erkennen, dass zwei unterschiedliche Öffnungen vorgesehen sind, die einen ersten Umsetzungsabschnitt 30 und einen zweiten Umsetzungsabschnitt 40 ausbilden. Die beiden Umsetzungsabschnitte definieren zwei unterschiedliche Sperrrichtungen SR1 und SR2. Bei dieser Ausführungsform des Umsetzungselementes 10 handelt es sich um eine eigenbewegte Ausbildung, so dass das Umsetzungselement 10 bei Aufnahme einer Getriebebewegung vom Getriebemittel 122 selbst eine Bewegung entlang der Umsatzrichtung UR durchführt. Die tatsächliche Korrelation der einzelnen Bewegungen wird später noch näher erläutert.

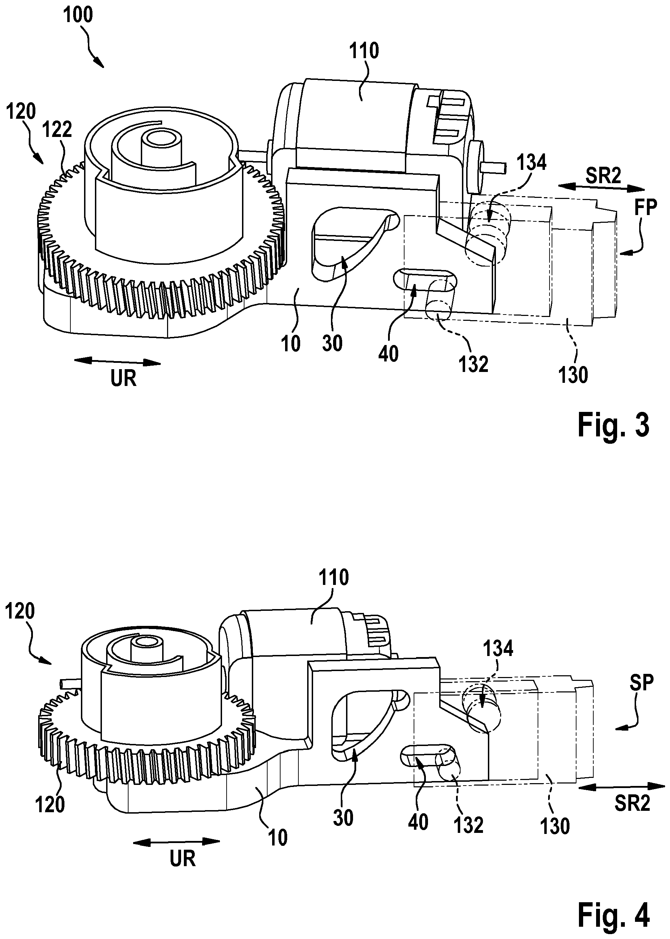

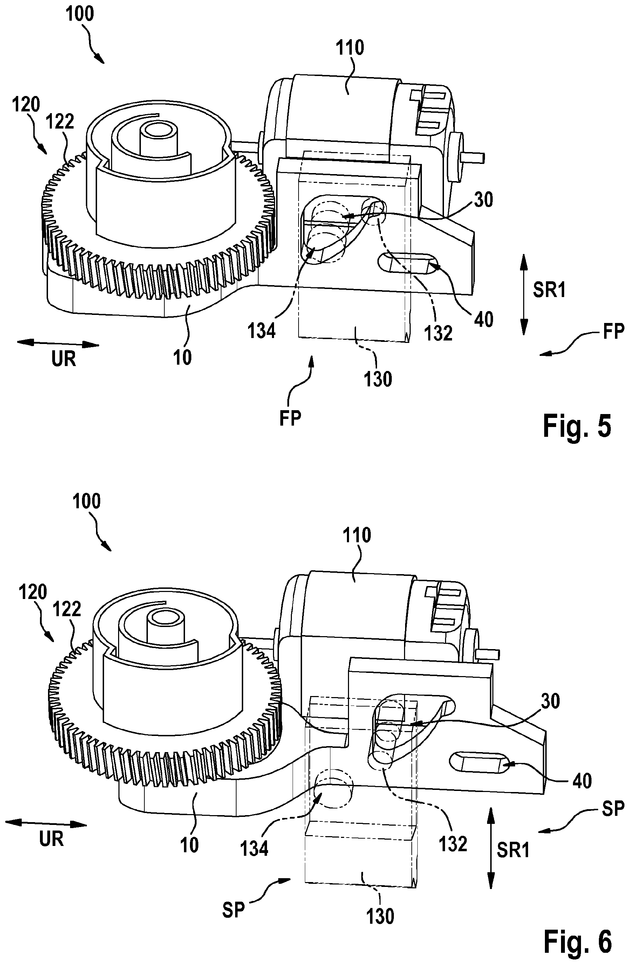

Die Figuren 3 und 4 zeigen eine Ausrichtung des Sperrbolzens 130 in der zweiten Sperrrichtung SR2, während die Figuren 5 und 6 den Sperrbolzen 130 in seiner ersten Sperrrichtung SR1 ausgerichtet zeigen. Die Figuren 3 und 5 zeigen dabei jeweils die Freigabeposition FP des Sperrbolzens 130 und die Figuren 4 und 6 die Sperrposition SP des Sperrbolzens 130.

Um bei einer Ausrichtung in der zweiten Sperrrichtung SR2 gemäß der Figuren 3 und 4 den Sperrbolzen 130 zu bewegen, erfolgt ein Antrieb mithilfe des elektrischen Antriebs 110. Dieser versetzt das Getriebemittel 122 in eine Rotationsbewegung. Diese Rotationsbewegung, welche die Getriebebewegung des Getriebemittels 122 darstellt, wird in eine Umsetzbewegung entlang der Umsetzrichtung UR des Umsetzungselements 10 umgewandelt. Dabei ist darauf hinzuweisen, dass in sämtlichen Figuren nicht dargestellt eine Federkraft den Sperrbolzen 130 in Richtung seiner Sperrposition SP beaufschlagt. Wird nun das Umsetzungselement 10 von Figur 3 zu Figur 4 in die Sperrposition SP bewegt, kann durch die Beaufschlagung mit der Federkraft gleichzeitig auch der Sperrbolzen 130 in diese Sperrposition SP gelangen. Dies wird ermöglicht durch die Korrelation des Führungsabschnitts 132, welcher hier als nasenförmiger Fortsatz in das Langloch des zweiten Umsetzungsabschnitts 40 eingreift. Für den Fall, dass durch eine Blockade, z. B. durch eine Sperrwand einer Sperrnut im Sperrabschnitt 310 der Lenkwelle 300 der Sperrbolzen 130 nicht vollständig in seine Sperrposition ausfahren kann, ist hier ein Freigang 42 vorgesehen, welcher unter Erhöhung der Federkraft bei der Federbeaufschlagung des Sperrbolzens 130 diesen Freigang in radialer Weise bzw. in translatorischer Weise bezogen auf das Umsetzungselement 10 zur Verfügung stellen kann.

Die Figuren 5 und 6 unterscheiden sich von der Ausführungsform der Figuren 3 und 4 ausschließlich durch die geänderte Ausrichtung des Sperrbolzens 130. Der Sperrbolzen 130 ist hier in der ersten Sperrrichtung SR1 ausgerichtet. Auch hier erfolgt wieder eine Korrelation des Führungsabschnitts 132 durch einen Eingriff in die entsprechende Öffnung des ersten Umsetzungsabschnitts 30. Hier ist darauf hinzuweisen, dass der erste Umsetzungsabschnitt 30 mit drei Teil-Umsetzungsabschnitten 30a, 30b und 30c versehen ist. Für die Bewegung aus der Sperrposition SP heraus erfolgt zuerst ein langsames, hubarmes Anheben mit einer geringen Umsetzungssteigung im ersten Teil-Umsetzungsabschnitt 30a. Sobald der Sperrbolzen 130 seine Sperrposition SP verlassen hat, erfolgt ein zweiter Teil-Umsetzungsabschnitt 30b mit einer erhöhten Umsetzungssteigung, mit dementsprechend erhöhtem Hub des Sperrbolzens 130. Sobald der Sperrbolzen 130 seine Freigabeposition FP erreicht hat, erfolgt die Übersetzung in einem dritten Teil-Umsetzungsabschnitt 30c, welcher als zusätzlicher Freigang in Richtung der Umsetzungsrichtung UR ausgebildet ist und auf diese Weise eine zusätzliche mechanische Sicherung des Sperrbolzens 130 in seiner Freigabeposition FP zur Verfügung stellt.

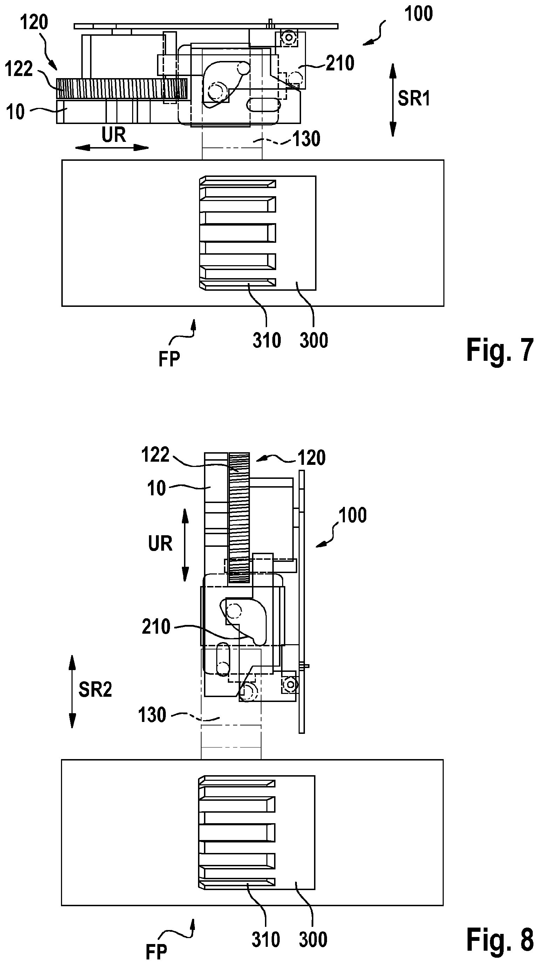

Die Figuren 7 und 8 zeigen, wie eine Lenkradsperre 100 gemäß der Figuren 4 bis 6 in unterschiedlicher Weise ausgerichtet eingesetzt werden kann. Die Ausführungsformen der Figuren 5 und 6 mit einem Sperrbolzen 130 in erster Sperrrichtung SR1 ist dabei in Figur 7 dargestellt und erlaubt eine horizontale Anordnung der gesamten elektrischen Lenkradsperre relativ zur Lenkwelle 300 und zum Sperrabschnitt 310. Sobald der Sperrbolzen 130 gemäß der Figuren 3 und 4 sich in der zweiten Sperrrichtung SR2 befindet, kann eine alternative Ausführungsform und Ausrichtung der elektrischen Lenkradsperre 100 in vertikaler Weise gemäß Figur 8 zur Verfügung gestellt werden. Die einzelnen Bauteile, also der Sperrbolzen 130, das Umsetzungselement 10 und alle weiteren Bauteile sind dabei identisch für beide Ausrichtungen der elektrischen Lenkradsperre 100. Dies gilt selbstverständlich auch für den nachfolgend noch zu erläuternden Sensorhebel 210 der Sensorvorrichtung 200.

Die Figur 9 basiert auf der Ausführungsform der Figuren 1 bis 6, jedoch ist hier zusätzlich eine Sensorvorrichtung 200 zur Verfügung gestellt. Neben einem Neben-Sensormittel 280, welches hier als Lichtschranke ausgebildet ist, ist als Sensormittel 290 hier ein Schaltsensor vorgesehen, der als Kontakt eine Sensorfläche 292 aufweist. Um diese Sensorfläche 292 zu kontaktieren, muss mithilfe eines Sensorhebels 210 eine entsprechende Schaltbewegung durchgeführt werden.

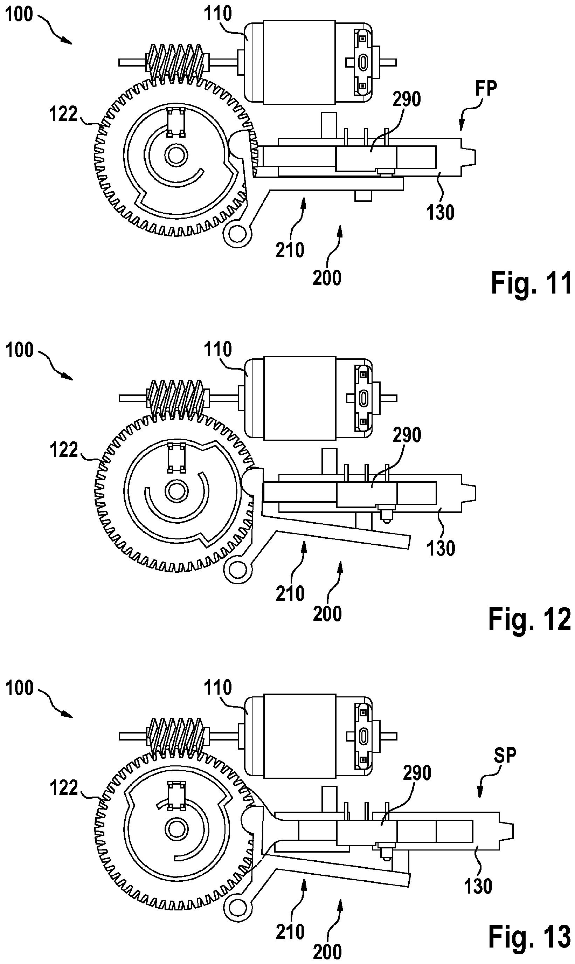

Figur 10 zeigt den Sensorhebel 210 in größerer Darstellung. Um eine Lagervorrichtung 220 und eine zugehörige Lagerachse LA gemäß Figur 9 ist der Sensorhebel 210 rotierbar gelagert. Die Rotationsbewegung wird erzeugt durch eine flächige Kontaktierung des ersten Hebelarms 230 mit einer Steuerfläche 124 des Getriebes 120. Sobald sich das Getriebe 120 und damit auch das Getriebemittel 120 bewegt bzw. rotiert, wird zu einem bestimmten Zeitpunkt der Rotation der erste Hebelarm 230 um die Lagerachse LA, welche parallel zur Getriebeachse GA ausgerichtet ist, ausgelenkt. Dies führt dazu, dass der Kontakt zwischen dem Sensormittel 290 und dem Kontaktabschnitt 242 des Sensorhebels 210 verloren geht und damit kein Sensorsignal mehr ausgelöst wird. Sobald sich der Sperrbolzen 130 in einer Zwischenposition gemäß Figur 12 oder in seiner Sperrposition gemäß Figur 13 befindet, ist dies der Fall. Das Sensorsignal durch das Sensormittel 290 lässt sich nur dann verfolgen, wenn der Kontaktabschnitt 242 die Sensorfläche 292 berührt. Um dies durchzuführen, ist neben einer Freigabe durch die Steuerfläche 124 des Getriebes 120 ein Eingreifen eines der beiden Schaltelemente 244 und 246 in einen zugehörigen Schaltabschnitt 134 des Sperrbolzens 130 notwendig. Dieser Schaltabschnitt 134 ist bei dieser Ausführungsform des Sperrbolzens 130 als Durchgangsöffnung 136 ausgebildet. Wie insbesondere die Figur 13 und die Figur 11 zeigen, ist die Schaltsituation sowohl abhängig von der Freigabe durch die Steuerfläche 124 als auch durch die Freigabe des Eingriffs des jeweiligen Schaltelements 244 und 246. Wie ebenfalls wieder gut zu erkennen ist, ist in Figur 9 der Sperrbolzen 130 in zwei unterschiedlichen Ausrichtungen hinsichtlich seiner Sperrrichtung SR1 und SR2 dargestellt. In beiden Fällen kann ein zugehöriges und für die Ausrichtung spezifisches Schaltelement 244 bzw. 246 in Eingriff gelangen und damit die Sensorfunktionalität zur Verfügung stellen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Umsetzungselement
- 20: Aufnahmeabschnitt
- 30: erster Umsetzungsabschnitt
- 30a: Teil-Umsetzungsabschnitt
- 30b: Teil-Umsetzungsabschnitt
- 30c: Teil-Umsetzungsabschnitt
- 32: Freigang
- 40: zweiter Umsetzungsabschnitt
- 42: Freigang

- 100: elektrische Lenkradsperre
- 110: elektrischer Antrieb
- 120: Getriebe
- 122: Getriebemittel
- 124: Steuerfläche
- 130: Sperrbolzen
- 132: Führungsabschnitt
- 134: Schaltabschnitt
- 136: Durchgangsöffnung

- 200: Sensorvorrichtung
- 210: Sensorhebel
- 220: Lagervorrichtung
- 230: erster Hebelarm
- 240: zweiter Hebelarm
- 242: Kontaktabschnitt
- 244: erstes Schaltelement
- 246: zweites Schaltelement
- 280: Neben-Sensormittel
- 290: Sensormittel
- 292: Sensorfläche

- 300: Lenkwelle
- 310: Sperrabschnitt der Lenkwelle

- SR1: erste Sperrrichtung
- SR2: zweite Sperrrichtung
- UR: Umsetzungsrichtung

- SP: Sperrposition
- FP: Freigabeposition

- LA: Lagerachse
- GA: Getriebeachse

## Patentansprüche

1. Sensorhebel (210) für eine Sensorvorrichtung (200) zur Erkennung zumindest einer Stellposition einer elektrischen Lenkradsperre (100) eines Fahrzeugs,
aufweisend eine Lagervorrichtung (220) für eine rotatorische Lagerung des Sensorhebels (210) sowie
einen ersten Hebelarm (230) für eine Kontaktierung einer Steuerfläche (124) eines Getriebemittels (122) eines Getriebes (120) der elektrischen Lenkradsperre (100) und einen zweiten Hebelarm (240) mit einem Kontaktabschnitt (242) zur Kontaktierung eines Sensormittels (290) der Sensorvorrichtung (200) in Abhängigkeit der Position des Getriebemittels (122),
wobei der zweite Hebelarm (240) für eine Freigabe der Kontaktierung des Sensormittels (290) mit dem Kontaktabschnitt (242) ein erstes Schaltelement (244) für einen Eingriff in einen Schaltabschnitt (134) eines Sperrbolzens (130) in einer ersten Sperrrichtung (SR1) und ein zweites Schaltelement (246) für einen Eingriff in den Schaltabschnitt (134) des Sperrbolzens (130) in einer zweiten Sperrrichtung (SR2) aufweist.

2. Sensorhebel (210) nach Anspruch 1,
**dadurch gekennzeichnet, dass**
das erste Schaltelement (244) und das zweite Schaltelement (242) identisch oder im Wesentlichen identisch ausgebildet sind.

3. Sensorhebel (210) nach einem der vorangegangenen Ansprüche,
**dadurch gekennzeichnet, dass**
das erste Schaltelement (244) und/oder das zweite Schaltelement (246) einen Vorsprung aufweisen für einen zumindest abschnittsweisen Eingriff in eine Vertiefung und/oder in eine Durchgangsöffnung (136) des Schaltabschnitts (134) in dem Sperrbolzen (130).

4. Sensorhebel (210) nach einem der vorangegangenen Ansprüche,
**dadurch gekennzeichnet, dass**
der erste Hebelarm (230) und der zweite Hebelarm (240) auf der gleichen Seite relativ zu der Lagervorrichtung (220) angeordnet sind.

5. Sensorhebel (210) nach einem der vorangegangenen Ansprüche,
**dadurch gekennzeichnet, dass**
der Kontaktabschnitt (242) eine flächige, insbesondere ebene, Erstreckung aufweist für die Kontaktierung einer Sensorfläche (292) des Sensormittels (290).

6. Sensorhebel (210) nach einem der vorangegangenen Ansprüche,
**dadurch gekennzeichnet, dass**
der Kontaktabschnitt (242) und die Schaltelemente (244, 246) am zweiten Hebelarm (240) in einer gleichen oder im Wesentlichen gleichen Ebene angeordnet sind.

7. Elektrische Lenkradsperre (100) für die Lenkwelle eines Fahrzeugs, aufweisend einen elektrischen Antrieb (110), ein Getriebe (120) mit mindestens einem Getriebemittel (122), welches mit dem elektrischen Antrieb (110) in Antriebsverbindung steht, weiter aufweisend einen Sperrbolzen (130), welcher zwischen einer Sperrposition (SP) und einer Freigabeposition (FP) bewegbar gelagert ist, wobei der Sperrbolzen (130) einen Schaltabschnitt (134) aufweist für einen Eingriff eines ersten Schaltelements (244) oder eines zweiten Schaltelements (246) eines Sensorhebels (210) mit den Merkmalen eines der Ansprüche 1 bis 6.

8. Elektrische Lenkradsperre (100) nach Anspruch 7,
**dadurch gekennzeichnet, dass**
die Lagerachse (LA) der Lagervorrichtung (220) parallel oder im Wesentlichen parallel zu einer Getriebeachse (GA) des Getriebemittels (122) ausgerichtet ist.

9. Elektrische Lenkradsperre (100) nach einem der Ansprüche 7 oder 8,
**dadurch gekennzeichnet, dass**
der Sperrbolzen (130) einen Führungsabschnitt (132) aufweist, welcher in führendem Kontakt steht mit einem ersten Umsetzungsabschnitt (30) oder einem zweiten Umsetzungsabschnitt (40) eines Umsetzungselements (10) zur Umsetzung einer Getriebebewegung des Getriebemittels (122) in eine Bolzenbewegung des Sperrbolzens (130), das Umsetzungselement (10) aufweisend einen Aufnahmeabschnitt (20) zur Aufnahme der Getriebebewegung vom Getriebemittel (122) sowie den ersten Umsetzungsabschnitt (30) zur Umsetzung der Getriebebewegung in eine Bolzenbewegung des Sperrbolzens (130) in einer ersten Sperrrichtung (SR1) und den zweiten Umsetzungsabschnitt (40) zur Umsetzung der Getriebebewegung in eine Bolzenbewegung des Sperrbolzens (130) in einer zweiten Sperrrichtung (SR2), wobei die erste Sperrrichtung (SR1) und die zweite Sperrrichtung (SR2) unterschiedliche Ausrichtungen aufweisen, und wobei der Aufnahmeabschnitt (20) des Umsetzungselements (10) mit dem Getriebemittel (122) zur Aufnahme der Getriebebewegung in Kontakt steht.

10. Elektrische Lenkradsperre (100) nach einem der Ansprüche 7 bis 9,
**dadurch gekennzeichnet, dass**
das Getriebe (120) als Schneckengetriebe ausgestaltet ist, wobei insbesondere das Getriebe selbsthemmend ausgeführt ist.

11. Elektrische Lenkradsperre (100) nach einem der Ansprüche 7 bis 10,
**dadurch gekennzeichnet, dass**
zumindest eine Steuerfläche (124) seitlich am Getriebemittel (122) des Getriebes (120) angeordnet ist,
wobei insbesondere durch ein Neben-Sensormittel (280) die Lage des Getriebemittels (122) überwachbar ist.
